# EUROPÄISCHE PATENTANMELDUNG

(11) **EP 4 357 440 A1**
(43) Veröffentlichungstag der Anmeldung: **24.04.2024**
(21) Anmeldenummer: 22020500.9
(22) Anmeldetag: 20.10.2022
(51) Int. Cl.: C10G 2/00, C01B 3/04, C10K 1/00, C10K 1/32, C10K 3/02, C25B 1/042

(54) **VERFAHREN ZUR HERSTELLUNG EINES ZIELPRODUKTS UND ENTSPRECHENDE ANLAGE**

(71) Anmelder: Linde GmbH, 82049 Pullach (DE); Technische Universität München, 80333 München (DE)
(72) Erfinder: Neuendorf, Stephanie, 82049 Pullach (DE); Heinzel, Albrecht, 82049 Pullach (DE); Peschel, Andreas, 82049 Pullach (DE); Hirtreiter, Edwing, 82049 Pullach (DE); Klein, Harald, 82090 München (DE); Hemauer, Johanna, 82090 München (DE)
(74) Vertreter: Fischer, Werner

(57) **Zusammenfassung**

Es wird ein Verfahren (100, 200, 300, 400) zur Herstellung eines Zielprodukts vorgeschlagen, bei dem Synthesegas (103, 113) einer Fischer-Tropsch-Synthese (10) unterworfen wird, wobei das Synthesegas (103, 113) unter Verwendung eines oder mehrerer erster Synthesgasbereitstellungsschritte (20, 50) und eines oder mehrerer zweiter Synthesegasbereitstellungsschritte (30) bereitgestellt wird, wobei unter Verwendung der Fischer-Tropsch-Synthese (10) ein Produktgemisch (110) bereitgestellt wird, wobei das Produktgemisch (110) oder ein Teil hiervon unter Erhalt eines Endgases (105) und eines Rohprodukts (106) einer Trennung (12) unterworfen wird, wobei ein erster Anteil (115) des Endgases (105) in einer gegenüber dem Endgas (105) unveränderten Zusammensetzung der Fischer-Tropsch-Synthese (10) erneut zugeführt wird, und wobei ein zweiter Anteil (125) des Endgases (105) oder ein Folgegemisch (155), das unter Verwendung des zweiten Anteils (125) des Endgases (105) gebildet wird, in den einen oder zumindest einen der mehreren zweiten Synthesegasbereitstellungsschritte (30), jedoch nicht in den einen oder einen der mehreren ersten Synthesegasbereitstellungsschritte (20, 50), überführt wird, oder als Brenngas verwendet wird. Eine entsprechende Anlage ist ebenfalls Gegenstand der vorliegenden Erfindung.

## Beschreibung

Die Erfindung betrifft ein Verfahren zur Herstellung eines Zielprodukts, das eine Fischer-Tropsch-Synthese umfasst, und eine entsprechende Anlage.

### Hintergrund

Die Fischer-Tropsch-Synthese ist bekannt und umfangreich in der Fachliteratur beschrieben. Statt auf viele, wird in diesem Zusammenhang beispielhaft auf den Artikel von Arno de Klerk, "Fischer-Tropsch Process" in der Kirk-Othmer Encyclopedia of Chemical Technology, Ausgabe 2013, verwiesen.

Die Fischer-Tropsch-Synthese umfasst eine Reihe von chemischen Reaktionen, bei denen ein als Synthese- oder Wassergas bezeichnetes Stoffgemisch aus Kohlenmonoxid und Wasserstoff in flüssige Kohlenwasserstoffe umgewandelt wird. Diese Reaktionen finden in Gegenwart von Metallkatalysatoren statt, typischerweise bei Temperaturen von 150 bis 300°C und Absolutdrücken von 1 bis 30 bar. Als Verfahren der sogenannten C1-Chemie wird die Fischer-Tropsch-Synthese sowohl bei der Kohleverflüssigung als auch bei Gas-to-Liquids-Verfahren zur Herstellung flüssiger Kohlenwasserstoffe eingesetzt.

Bei der Fischer-Tropsch-Synthese werden typischerweise Kobalt- oder Eisenkatalysatoren verwendet. In verfügbaren Reaktortypen liegen die Katalysatoren als Festbett, Slurry, Wirbelschicht, zirkulierende Wirbelschicht- oder mikrostrukturiert vor. Ein Produktgemisch einer Fischer-Tropsch-Synthese enthält eine Vielzahl von Komponenten, die von kurzkettigen gasförmigen Kohlenwasserstoffen bis zu langkettigen Wachsen reichen. Das Produktspektrum umfasst gesättigte und ungesättigte Verbindungen (z.B. Alkane, Alkene und Oxygenate).

Das Produktgemisch wird gekühlt und in einen gasförmigen Strom, einen flüssigen Kohlenwasserstoffstrom, einen Abwasserstrom und einen Strom mit hohem Wachsgehalt getrennt. Die Kühlung kann insbesondere mehrstufig erfolgen, wobei eine flüssige Wachsphase bereits im Reaktor anfallen und aus diesem abgezogen werden kann. Ein sogenannter Hochtemperaturabscheider kann sich zur Abscheidung weiterer Wachse anschließen. Diesem kann ein sogenannter Niedertemperaturabscheider oder ein Dreiphasenabscheider nachfolgen. Im Weiteren werden die flüssigen Kohlenwasserstoffe und Wachse zusammengefasst und als Rohprodukt (engl. Crude) bezeichnet. Die gasförmige, kurzkettige Kohlenwasserstoffe, nicht umgesetzte Edukte und Inertgase enthaltende Fraktion wird als Endgas (engl. Tail Gas) bezeichnet. Unter Inertgasen werden dabei nachfolgend nicht nur die weithin als solche bekannten Gaskomponenten wie Stickstoff und Edelgase, sondern alle sich in einem entsprechenden Verfahren inert oder im Wesentlichen inert verhaltenden Gaskomponenten verstanden, also auch Kohlendioxid und Methan.

Unter der Angabe "im Wesentlichen inert" soll dabei verstanden werden, dass eine Umsetzung entsprechender Gaskomponenten nicht oder nur in einem geringen Umfang erfolgt, der sich auf das Gesamtverfahren nicht nennenswert auswirkt. Eine sich "im Wesentlichen inert" verhaltende Gaskomponente wird dabei typischerweise zu nicht mehr als 5%, 1%, 0,5% oder 0,1% umgesetzt.

Kohlenmonoxid und Wasserstoff, bzw. Synthesegas, die Ausgangsstoffe für die Fischer-Tropsch-Synthese, können durch Vergasung aus Kohle oder Biomasse hergestellt werden. Auch eine Herstellung von Synthesegas aus Erdgas ist bekannt. Die Synthesegaserzeugung ist beispielsweise im Artikel "Gas Production" in Ullmann's Encyclopedia of Industrial Chemistry, Onlineausgabe 15. Dezember 2006, DOI 10.1002/14356007.a12_169.pub2, beschrieben. Zur Umsetzung von Erdgas zu Synthesegas in industriellem Maßstab können beispielsweise die autotherme Reformierung, die partielle Oxidation, die Dampfreformierung oder Kombinationen dieser Verfahren eingesetzt werden.

Neuerdings werden Fischer-Tropsch-Verfahren (FT-Verfahren) auf der Basis von Kohlendioxid als Kohlenstoffquelle entwickelt. Beispielsweise können Wasserstoff und Kohlendioxid durch eine reverse Wassergasshift bzw. Wassergaskonvertierung zu Synthesegas umgesetzt werden, wie bei H. Yang et al., Catal. Sci. Technol., 2017, 7, 4580-4598 und G. Centi, Energy Environ. Sci., 2013, 6, 1711-1731 beschrieben. Bei der reversen Wassergasshift wird ein Molekül Kohlendioxid endotherm mit einem Molekül Wasserstoff zu einem Molekül Kohlenmonoxid und einem Molekül Wasser umgesetzt. Auch eine Co-Elektrolyse von Wasser und Kohlendioxid in einem Hochtemperaturelektrolyseverfahren, wie beispielsweise bei R. Küngas, J. Elektrochem. Soc. 2020, 167, 044508 zusammengefasst, kann in diesem Zusammenhang zum Einsatz kommen. Der benötigte Wasserstoff kann aus beliebigen Wasserstoffquellen bezogen werden, diesbezüglich ist die vorliegende Erfindung nicht beschränkt. Beispielsweise kann "grüner" oder "blauer" Wasserstoff aus einem Elektrolyseverfahren eingesetzt werden, jedoch auch Wasserstoff aus einem Ammoniakcracker oder aus einer Pipeline.

Entsprechende Hochtemperaturelektrolyseverfahren können insbesondere unter Verwendung von Festoxidelektrolysezellen (SOEC, Solid Oxide Electrolysis Cells) und protonenleitenden Hochtemperaturmaterialien durchgeführt werden. Festoxidelektrolysezellen umfassen insbesondere dotiertes Zirkondioxid oder dotierte Oxide seltener Erden, die bei mehr als 800°C, in neueren Ausgestaltungen auch bereits ab 600°C, leitfähig werden.

Das Endgas kann zumindest teilweise in das Fischer-Tropsch-Verfahren rückgeführt werden, ohne dass eine Aufbereitung desselben durchgeführt wird (sogenannte interne Rückführung). Es ist aber auch möglich, das Endgas zumindest teilweise in das Fischer-Tropsch-Verfahren zurückzuführen, und den zurückgeführten Teil dabei bestimmten Aufbereitungsschritten zu unterwerfen (sogenannte externe Rückführung). Aufbereitungsschritte können beispielsweise einen Flüssiggas-Rückgewinnungsschritt, einen Rückführungskreislauf zu einer vorgelagerten Reformierung, eine Sauergasentfernung, eine Hydrierung und eine Druckwechseladsorption (engl. Pressure Swing Adsorption, PSA) zur Bereitstellung von Wasserstoff für nachgeschaltete Prozesse umfassen.

Um eine hohe Energie-, Wasserstoff- und Kohlenstoffeffizienz zu erreichen, wird vorteilhafterweise neben einer internen auch eine externe Rückführung des Endgases aus der Fischer-Tropsch-Synthese eingesetzt. Dieses Endgas enthält neben Wasserstoff und Kohlenmonoxid auch Kohlendioxid, Inertgase, Methan und höhere Kohlenwasserstoffe. Will man dieses statt einer oder einem Export als Brennstoff zumindest zu einem Teil auch einer alternativen Aufbereitung in dem Verfahren zuführen, kann eine Vorbehandlung erforderlich sein. Die vorliegende Erfindung stellt sich die Aufgabe, ein vorteilhaftes Verfahren anzugeben, das eine Nutzung eines derartigen Endgases ermöglicht, um die Gesamteffizienz des Verfahrens zu verbessern, ohne etwaige Nachteile in Kauf nehmen zu müssen.

### Offenbarung der Erfindung

Diese Aufgabe wird durch ein Verfahren, das eine Fischer-Tropsch-Synthese umfasst, und eine entsprechende Anlage mit den Merkmalen der jeweiligen unabhängigen Patentansprüche gelöst. Ausgestaltungen sind Gegenstand der abhängigen Patentansprüche und der nachfolgenden Beschreibung.

Es kann nicht ausgeschlossen werden, dass bei Aufbereitungsschritten, wie sie beispielsweise bei einer Rückführung von Endgas in eine reverse Wassergasshift erforderlich sein können, eine Degradation und/oder Verkokung erfolgen kann. Wenngleich diese Probleme typischerweise durch Gegenmaßnahmen gut handhabbar sind, können auch alternative Lösungen unter Verwendung konventioneller, gut etablierter Technologien vorteilhaft sein. Im Rahmen der vorliegenden Erfindung wird dabei eine Verwertung eines Teils des Endgases in einem separaten oder nachgeschalteten Synthesegasbereitstellungsschritt, z.B. Dampfreformierung, autothermer Reformierung oder partieller Oxidation, vorgeschlagen. Ein weiterer Teil wird direkt bzw. intern in den Fischer-Tropsch-Kreislauf zurückgeführt

Ausgestaltungen der vorliegenden Erfindung betreffen damit Varianten einer Verwertung eines Endgases einer Fischer-Tropsch-Synthese. In Ausgestaltungen der Erfindung erfolgt neben einer direkten Rückführung eines Anteils des Endgases (hier auch als "erster Anteil" bezeichnet) eine Überführung eines weiteren Anteils des Endgases (hier auch als "zweiter Anteil" bezeichnet) in einen weiteren Verfahrensschritt zur Herstellung von Synthesegas, der insbesondere aus einer Dampfreformierung, einer autothermen Reformierung und einer partiellen Oxidation ausgewählt sein kann, wobei insbesondere eine partielle Oxidation erfolgen kann. Alternativ kann eine Nutzung des zweiten Anteils als Brenngas oder als Brennstoff in einer Festoxid-Brennstoffzelle (SOFC, Solid Oxide Fuel Cell) vorgesehen sein. Ein nochmals weiterer Anteil des Endgases (hier auch als "dritter Anteil" bezeichnet) kann in bestimmten Ausgestaltungen aus dem Verfahren ausgeleitet werden (als Spülgas bzw. Purgegas), wodurch Inertkomponenten aus dem Kreislauf ausgeschleust werden können. Dies ist jedoch typischerweise dann nicht notwendig, wenn ein Anteil des Endgases verfeuert wird, weil dadurch Inertkomponenten in ein Abgas überführt und damit ebenfalls aus dem Kreislauf ausgeschleust werden können.

Insgesamt schlägt die vorliegende Erfindung zur Lösung der genannten Aufgaben ein Verfahren zur Herstellung eines Zielprodukts vor, bei dem Synthesegas einer Fischer-Tropsch-Synthese unterworfen wird, wobei das Synthesegas unter Verwendung eines oder mehrerer erste Synthesgasbereitstellungsschritte und eines oder mehrerer zweiter Synthesegasbereitstellungsschritte bereitgestellt wird

In Ausgestaltungen der vorliegenden Erfindung wird unter Verwendung der Fischer-Tropsch-Synthese ein Produktgemisch gewonnen, wobei das Produktgemisch oder ein Teil hiervon unter Erhalt eines Endgases und eines Rohprodukts einer Trennung unterworfen wird. Ein erster Anteil des Endgases wird in einer gegenüber dem Endgas unveränderten Zusammensetzung der Fischer-Tropsch-Synthese erneut zugeführt, und ein zweiter Anteil des Endgases oder ein Folgegemisch, das unter Verwendung des zweiten Anteils des Endgases gebildet wird, wird in den einen oder zumindest einen der mehreren zweiten Synthesegasbereitstellungsschritte, jedoch nicht in den einen oder einen der mehreren ersten Synthesegasbereitstellungsschritte, überführt oder als Brenngas verwendet.

In Ausgestaltungen der vorliegenden Erfindung kann dabei vorgesehen sein, dass ein erster Anteil des Synthesegases unter Verwendung des einen oder der mehreren ersten Synthesegasbereitstellungsschritte bereitgestellt wird und dass ein zweiter Anteil des Synthesegases unter Verwendung des einen oder der mehreren zweiten Syntgesegasbereitstellungsschritte bereitgestellt wird. Der eine oder die mehreren ersten Synthesegasbereitstellungsschritte und der eine oder die mehreren zweiten Synthesegasbereitstellungsschritte können dabei zumindest zum Teil parallel zueinander durchgeführt werden.

Eine Durchführung von Synthesegasbereitstellungsschritten "parallel zueinander" soll dabei insbesondere eine Durchführung in zwei oder mehreren unterschiedlichen Reaktoreinheiten umfassen, denen separat voneinander Produktgemische entnommen werden, wobei ein Produktgemisch eines der Reaktoren nicht in unveränderter Zusammensetzung einem weiteren der Reaktoren zugeführt wird, wenn diese parallel betrieben werden. Wie nachfolgend erläutert, schließt ein entsprechender "paralleler" Betrieb aber nicht aus, dass aus einem Produktgemisch eines der Reaktoren durch eine nachgeschaltete Synthese, Trennung usw. eine Fraktion mit anderer Zusammensetzung gebildet wird, die dann in den anderen Reaktor überführt wird. Insbesondere zeichnet sich eine "parallele" Durchführung des oder der ersten und zweiten Synthesegasbereitstellungsschritte in Ausgestaltungen der vorliegenden Erfindung auch dadurch aus, dass in den oder die ersten Synthesegasbereitstellungsschritte kein Endgas des Fischer-Tropsch-Verfahrens zurückgeführt wird, oder diese allenfalls zu einem unerheblichen Anteil von beispielsweise weniger als 10% im Mengenanteil erfolgt, der sich nicht nennenswert auf die Verfahrensführung auswirkt.

Alternativ kann aber auch eine serielle Anordnung vorgesehen sein, und zwar insbesondere dergestalt, dass ein Produktgemisch aus dem einen oder den mehreren ersten Synthesegasbereitstellungsschritten, oder ein Teil hiervon, dem einen oder den mehreren zweiten Synthesegasbereitstellungsschritten in unveränderter Zusammensetzung zugeführt wird, wie beispielsweise in einer reversen Wassergasshift mit nachgeschalteter paralleler Oxidation der Fall. Diese Ausgestaltung kann den besonderen Vorteil haben, dass ein Kohlendioxidschlupf signifikant verringert werden kann, ggf. jedoch auf Kosten der Gesamteffizienz. Auch kann auf diese Weise ggf. dem Problem einer Methanbildung in der reversen Wassergasshift in besonders vorteilhafter Weise begegnet werden.

Mit anderen Worten, und wie bereits zuvor angesprochen, ist in Ausgestaltungen der vorliegenden Erfindung eine interne Rückführung von Endgas vorgesehen, neben dieser aber auch eine externe Rückführung derart, dass mit dem dort verwendeten Endgas ein weiterer Synthesegasbereitstellungsschritt beschickt wird, oder dass mit dem dort verwendeten Endgas durch Verfeuern Wärme gewonnen wird.

Der zweite Anteil kann in bestimmten Fällen direkt in den einen oder zumindest einen der mehreren zweiten Synthesegasbereitstellungsschritte zurückgeführt werden. Falls der zweite Anteil jedoch gesättigte und ungesättigte Kohlenwasserstoffe mit zwei und mehr Kohlenstoffatomen aufweist, die ggf. eine schädigende Auswirkung auf den Prozess (z.B. Verkokungen von durchströmten Wärmeübertragern beim Erhitzen) oder einen verwendeten Katalysator haben können, können konventionelle Bearbeitungschritte des zweiten Anteils bei der Rückführung vorteilhaft sein. Auch auch Adsorptions- und/oder Hydrierungsschritte können vorgesehen sein, in denen Gasgemische gebildet werden, die ihrerseits zurückgeführt werden können. Eine Verbrennung, falls durchgeführt, kann zur Beheizung anderer Anlagenkomponenten (z.B. der reversen Wassergasshift, einer Reformierung, eines Dampferzeugers oder einer Hochtemperaturelektrolyse oder -Co-Elektrolyse verwendet werden. Eine energetische Nutzung kann auch zur Strom- und/oder Wärmeerzeugung erfolgen, z.B. in einer Hochtemperatur-Festoxidbrennstoffzelle. Auch kann zumindest einen Teil der externen Rückführung zur Kathoden- und/oder Andoenseite einer Co-Elektrolyse oder der Anodenseite einer Elektrolyse unter Verwendung einer Festoxid-Brennstoffzelle erfolgen. Bei Rückführung zur Kathodenseite der Co-Elektrolyse kann ggf. eine Vorbehandlung, z.B. eine Vorreformierung des Rückführstroms, vorteilhaft sein, um keine die Elektrolysezelle schädigenden Komponenten wie längerkettige Kohlenwasserstoffe in die Kathodenseite einzuführen. Zumindest ein Teil dieser Ausgestaltungen und von Aspekten derselben kann in beliebiger Weise kombiniert werden, wodurch sich besonders vorteilhafte Ausgestaltungen ergeben.

Die im Rahmen von Ausgestaltungen der Erfindung vorgeschlagenen Rückführungskonzepte können mit einer (zumindest teilweise) elektrisch beheizten reversen Wassergasshift und/oder Dampfreformierung (als erstem bzw. zweitem Synthesegasbereitstellungsschritt) kombiniert werden. Darüber hinaus kann das drucklose Abgas oder können Abgase aus weiteren nachgeschalteten Verfahrensschritten (z.B. Hydrocracken) genutzt werden, indem diese in die Synthesegaserzeugung für die Fischer-Tropsch-Synthese (in dem ersten bzw. zweiten Synthesegasbereitstellungsschritt) einbezogen werden.

Mit der vorliegenden Erfindung und ihren Ausgestaltungen werden vorteilhafte Konzepte für die Wiederverwendung eines Fischer-Tropsch-Endgases vorgeschlagen, durch die die Kohlenstoffeffizienz in besonderer Weise erhöht werden kann. Der Abgasstrom wird teilweise intern ohne weitere Gasaufbereitungsschritte recycelt. Die Menge des internen Recyclings wird durch den Gehalt der Gaskomponenten Kohlendioxid, Methan, Stickstoff und Argon begrenzt, da diese Gaskomponenten den Wasserstoff- und Kohlenmonoxid-Partialdruck in der Fischer-Tropsch-Synthese absenken. Ist der Gehalt unerwünschter Gaskomponenten zu hoch, kann die Umwandlung von Kohlenmonoxid abnehmen und ein größeres Reaktorvolumen erforderlich sein. Dies kann durch die teilweise externe Rückführung im Rahmen von Ausgestaltungen der Erfindung vermieden werden.

Verbleibendes Endgas wird also extern rückgeführt, und zwar in einen oder mehrere weitere Synthesegasbereitstellungsschritte, einschließlich beliebiger Verarbeitungsschritte (z.B. Adsorption, Hydrierung), oder als Brenngas verwendet. In einigen Konfigurationen wird ein Spülstrom gebildet, um Inertstoffe zu entfernen. Kohlenstoff-Wirkungsgrade von 47 bis 95% und Leistungswirkungsgrade von 45 bis 50% (berechnet als unterer Heizwert des Fischer-Tropsch-Rohprodukts dividiert durch den Energieverbrauch) können dabei erzielt werden. Wenn keine Verarbeitungsschritte in die externe Rückführung einbezogen werden und diese direkt in den Brenner zur Beheizung der reversen Wassergasshift erfolgt, kann noch ein Wirkungsgrad von bis 40% und mehr erzielt werden.

Das im Rahmen der vorliegenden Erfindung eingesetzte Synthesegas enthält Wasserstoff, Kohlenmonoxid und Kohlendioxid, , wobei der Begriff "enthält", wie üblich, die Komponenten eines Gasgemischs nicht abschließend beschreibt, sondern weitere Komponenten in einem entsprechenden Gasgemisch offenlässt. Durch die erfindungsgemäß vorgeschlagenen Maßnahmen kann eine Anreicherung des Kohlendioxids, die zu den erläuterten negativen Effekten führt, vermieden und zugleich ein kohlendioxidhaltiges Synthesegas verwendet werden.

Das Endgas kann insbesondere Wasserstoff, Kohlenmonoxid, Kohlendioxid, Methan, einen oder mehrere Kohlenwasserstoffe mit zwei, drei und/oder vier Kohlenstoffatomen und ein oder mehrere Inertgase enthalten. Auch höhere Kohlenwasserstoffe mit fünf und mehr Kohlenstoffatomen können in geringem Umfang, typischerweise im ppm-Bereich, enthalten sein. Durch den Einsatz von Ausgestaltungen der vorliegenden Erfindung ist eine vorteilhafte Nutzung hiervon möglich.

In einer Gruppe von Ausgestaltungen der vorliegenden Erfindung ist der erste Synthesegasbereitstellungsschritt oder ist einer der mehreren ersten Synthesegasbereitstellungsschritte eine reverse Wassergasshift, wobei der reversen Wassergasshift Wasserstoff und Kohlendioxid zugeführt werden, und wobei in der reversen Wassergasshift ein Teil des Wasserstoffs mit einem Teil des Kohlendioxids zu Kohlenmonoxid und Wasser umgesetzt wird. Eine reverse Wassergasshift kann unter Verwendung unterschiedlicher Teilschritte bekannter Art, beispielsweise einer reversen Hoch- und einer reversen Niedertemperaturshift, und entsprechender Apparate durchgeführt werden. Die vorliegende Erfindung ist nicht auf eine spezifische Ausgestaltung eingeschränkt. Allgemein können Temperaturen von 600 bis 1000 °C oder 400 bis 600 °C zum Einsatz kommen. Die vorliegende Erfindung ist nicht auf eine spezifische Ausgestaltung eingeschränkt.

In Ausgestaltungen der vorliegenden Erfindung kann der reversen Wassergasshift ferner bis zu 10, 20, 30, 40 oder 50 Molprozent Dampf zugeführt werden, wodurch sich Verkokungen in besonders vorteilhafter Weise verhindern lassen.

In einer Ausgestaltung der vorliegenden Erfindung kann dabei vorgesehen sein, dass der zweite Anteil des Endgases in gegenüber dem Endgas unveränderter Zusammensetzung in den einen oder zumindest einen der mehreren zweiten Synthesegasbereitstellungsschritte überführt wird. Hierbei handelt es sich um eine apparativ besonders einfache Lösung, da auf weitere Bearbeitungsschritte und die Bereitstellung entsprechender Apparate verzichtet werden kann.

Alternativ kann in den einen oder zumindest einen der mehreren zweiten Synthesegasbereitstellungsschritte das Folgegemisch, das unter Verwendung des zweiten Anteils des Endgases gebildet wird, überführt werden. Das Folgegemisch kann insbesondere unter Verwendung eines Trennschritts gebildet werden, dem der zweite Anteil des Endgases zugeführt wird, und in dem das Folgegemisch als ein gegenüber dem zweiten Anteil des Endgases an Kohlenwasserstoffen mit zwei und mehr Kohlenstoffatomen abgereichertes und an tiefer siedenden Verbindungen angereichertes Komponentengemisch gebildet wird. In einem derartigen Trennschritt kann dabei insbesondere ein weiteres Produktgemisch gebildet werden, das gegenüber dem zweiten Anteil des Endgases an Kohlenwasserstoffen mit zwei und mehr Kohlenstoffatomen angereichert und an tiefer siedenden Verbindungen abgereichert ist. Entsprechende Komponenten lassen sich auf diese Weise gezielt zurückgewinnen, so dass sich die Gesamtausbeute eines entsprechenden Verfahrens in solchen Ausgestaltungen weiter steigern lässt.

Entsprechende Trennschritte können in beliebiger Weise ausgestaltet sein, und beispielsweise eine adsorptive, absorptive oder Tieftemperaturtrennung umfassen, wie grundsätzlich aus dem Bereich der Trenntechnik bekannt. Als Beispiele sind hier eine stufenweise Kondensation und zusätzliche Rektifikation zu nennen.

Ausgestaltungen der vorliegenden Erfindung können einen Kohlendioxidentfernungsschritt umfassen. Mit anderen Worten kann in derartigen Ausgestaltungen vorgesehen sein, dass aus dem Synthesegas, das im Übrigen der Fischer-Tropsch-Synthese unterworfen wird, Kohlendioxid abgetrennt wird, wobei das abgetrennte Kohlendioxid insbesondere zumindest zum Teil in den einen oder zumindest einen der mehreren ersten und/oder zweiten Synthesegasbereitstellungsschritte zurückgeführt werden kann. Dieses Kohlendioxid kann somit einer weiteren Umsetzung unterworfen werden, ohne dass die Fischer-Tropsch-Synthese hierdurch, mit den erläuterten negativen Effekten, belastet wird. Die Rückführung in eine reverse Wassergasshift ist insbesondere vorteilhaft, um das Verhältnis von Wasserstoff zu Kohlenmonoxid zu erhöhen und eine höhere Umsetzung von Kohlendioxid zu erzielen. Bei Betrachtung der Reaktionsgleichung der reversen Wassergasshift, die eine Gleichgewichtsreaktion darstellt, bedeutet eine Rückführung von Kohlendioxid die Erhöhung der Reaktionsteilnehmer auf der linken Seite der Reaktionsgleichung. Somit kann sich mehr Kohlenmonoxid bilden. Damit sinkt des Verhältnis von Wasserstoff zu Kohlenmonoxid am Reaktoraustritt durch die Rückführung von Kohlendioxid.

Eine Rückführung, ggf. auch nur eines Anteils, des Kohlendioxids in eine partielle Oxidation kann besonders vorteilhaft sein, da sich hierbei ein besonders vorteilhaftes Brennerdesign erreichen lässt. In Ausgestaltungen der vorliegenden Erfindung können dabei Brenner verwendet werden, denen in Form von koaxialen, konzentrischen Gasströmen, von innen nach außen oder umgekehrt, Sauerstoff oder ein sauerstoffhaltiges Gas, Kohlendioxid, und das Endgas bzw. ein entsprechender Anteil hiervon, zugeführt werden. Auf diese Weise schafft man eine zirkuläre Gasumhüllung des zentralen Sauerstoffstroms, der die Vermischung und Zündung desselben mit dem wasserstoffhaltigen Endgas verzögert und damit das Temperaturmaximum von der Brennerspitze weg verlagert. Auf diese Weise können Schäden vermieden werden.

Die Kohlendioxidabtrennung kann entweder stromab des einen oder zumindest eines der mehreren ersten Synthesegasbereitstellungsschritte oder stromab des einen oder zumindest eines der mehreren zweiten Synthesegasbereitstellungsschritte, oder stromab beider, vorgesehen sein, wobei jeweils Einzelströme an Synthesegas oder ein Sammelstrom bearbeitet werden kann. Eine Kohlendioxidentfernung kann in bekannter Art und Weise, insbesondere absorptiv mittels physikalischer und/oder chemischer Waschmittel, beispielsweise mittels Amin- und/oder Laugewäsche, aber auch ggf. adsorptiv, z.B. mittels Druckwechseladsorption erfolgen.

In sämtlichen Ausgestaltungen der Erfindung kann eine gezielte Einstellung der Komponentenverhältnisse im Synthesegas zur Fischer-Tropsch-Synthese, d.h. insbesondere eines Verhältnisses von Wasserstoff zu Kohlenmonoxid, vorgesehen sein. Hierzu kann insbesondere die Verfahrensführung in dem einen oder zumindest einem der mehreren ersten Synthesegasbereitstellungsschritte und/oder in dem einen oder zumindest einem der mehreren zweiten Synthesegasbereitstellungsschritte angepasst werden, wie grundsätzlich bekannt.

In sämtlichen Ausgestaltungen der vorliegenden Erfindung kann eine reverse Wassergasshift, sofern vorgesehen, unter Verwendung von Verbrennungswärme durchgeführt werden, wobei ein dritter Anteil des Endgases zur Bereitstellung der Verbrennungswärme verwendet wird. Wird die reverse Wassergasshift unter Verwendung von elektrischer Wärme durchgeführt, kann ein dritter Anteil des Endgases stattdessen in gegenüber dem Endgas unveränderter Zusammensetzung aus dem Verfahren ausgeleitet werden. Alternativ zu einer derartigen Ausleitung, die insbesondere zur Ausschleusung von Inertgasen dient, kann auch beispielsweise eine elektrochemische Verwendung, beispielsweise an einer Anodenseite einer Festoxidbrennstoff- oder-elektrolysezelle erfolgen.

In Ausgestaltungen der vorliegenden Erfindung kann vorgesehen sein, dass der erste Synthesegasbereitstellungsschritt oder einer der mehreren ersten Synthesegasbereitstellungsschritte ein Hochtemperatur-Co-Elektrolyseschritt ist, wobei dem Hochtemperatur-Co-Elektrolyseschritt Kohlendioxid und Wasser unter Erhalt von Wasserstoff und Kohlenmonoxid co-elektrolysiert werden. In einer derartigen Hochtemperatur-Co-Elektrolyse kann Kohlendioxid in besonders vorteilhafter Weise kathodenseitig, wie erwähnt ggf. nach einem Vorbehandlungsschritt, genutzt werden, da die Hochtemperatur-Co-Elektrolyse die Umsetzung von Kohlendioxid zu weiterem Kohlenmonoxid erlaubt. Auch die kathoden- und/oder anodenseitige Zuführung ist möglich. Anodenseitig kann in Ausgestaltungen der Erfindung auch der dritte Anteil des Endgases thermisch verwertet werden.

Wie mehrfach erwähnt, kann der eine oder kann einer der mehreren zweiten Synthesegasbereitstellungsschritte unter Verwendung einer Dampfreformierung, einer autothermen Reformierung oder einer partiellen Oxidation durchgeführt werden. Hierbei handelt es sich um besonders etablierte und stabile Prozesse, so dass die vorliegende Erfindung in entsprechenden Ausgestaltungen besonders zuverlässig implementiert werden kann. Da entsprechende Verfahren hinlänglich bekannt sind, sei in diesem Zusammenhang auf einschlägige Fachliteratur wie den Artikel "Gas Production" in Ullmann's Encyclopedia of Industrial Chemistry, Onlineausgabe 15. Dezember 2006, DOI 10.1002/14356007.a12_169.pub2, verwiesen.

In dem einen oder in zumindest einem der mehreren ersten und/oder zweiten Synthesegasbereitstellungsschritte kann in Ausgestaltungen der Erfindung Sauerstoff oder ein sauerstoffhaltiger Strom genutzt werden. So kann, lediglich um einige Beispiele zu nennen, Sauerstoff aus einer Wasserelektrolyse in einer partiellen Oxidation integriert werden, oder sauerstoffreiche Spülluft aus einer FestoxidBrennstoffzelle oder einer Co-Elektrolyse kann als Verbrennungsluft für die reverse Wassergasshift oder in anderen Brennern genutzt werden.

Generell können Ausgestaltungen vorgesehen sein, in denen stromab der Fischer-Tropsch-Synthese ein oder mehrere weitere Verfahrensschritte durchgeführt werden, die mit dem Rohprodukt oder einem Teil hiervon beschickt werden, wobei stromab des einen oder der mehreren weiteren Verfahrensschritte ein oder mehrere Komponentengemische abgetrennt werden, von denen ein Teil oder jeweils ein Teil in den einen oder zumindest einen der ersten und/oder zweiten Synthesegasbereitstellungsschritte zurückgeführt werden.

Eine Anlage zur Herstellung eines Zielprodukts, die dafür eingerichtet ist, Synthesegas einer Fischer-Tropsch-Synthese zu unterwerfen, das Synthesegas unter Verwendung eines oder mehrerer erster Synthesgasbereitstellungsschritte und eines oder mehrerer zweiter Synthesegasbereitstellungsschritte bereitzustellen, unter Verwendung der Fischer-Tropsch-Synthese ein Produktgemisch bereitzustellen, das Produktgemisch oder einen Teil hiervon unter Erhalt eines Endgases und eines Rohprodukts einer Trennung zu unterwerfen, einen ersten Anteil des Endgases in einer gegenüber dem Endgas unveränderten Zusammensetzung der Fischer-Tropsch-Synthese erneut zuzuführen, und einen zweiten Anteil des Endgases oder ein Folgegemisch, das unter Verwendung des zweiten Anteils des Endgases gebildet wird, in den einen oder zumindest einen der mehreren zweiten Synthesegasbereitstellungsschritte, jedoch nicht in den einen oder einen der mehreren ersten Synthesegasbereitstellungsschritte zu überführen oder als Brenngas zu verwenden, ist ebenfalls Gegenstand der vorliegenden Erfindung.

Zu weiteren Merkmalen und Vorteilen einer entsprechenden Anlage und Ausgestaltungen hiervon sei auf die obigen Erläuterungen betreffend das erfindungsgemäß vorgeschlagene Verfahren und seine Ausgestaltungen ausdrücklich verwiesen, da diese hierfür in gleicher Weise gelten.

Entsprechendes gilt auch für eine Anlage, die gemäß einer Ausgestaltung der Erfindung dazu eingerichtet ist, ein Verfahren gemäß einer beliebigen Ausgestaltung der vorliegenden Erfindung durchzuführen.

Nochmals zusammengefasst können Vorteile der erfindungsgemäß und gemäß Ausgestaltungen der Erfindung vorgeschlagenen Maßnahmen und entsprechender Maßnahmenkombinationen einen erhöhten Kohlenstoff-Wirkungsgrad und Strom-Wirkungsgrad umfassen. Eine kurzfristige Realisierung ist aufgrund der Verwendung der etablierten weiteren Verfahren zur Synthesegaserzeugung möglich. Ferner können ein Brenngas-Export und eine Konditionierung und ein Export des Endgases vermieden werden. Das recycelte Endgas bedarf, insbesondere wenn es einer partiellen Oxidation zugeführt wird, keines oder eines nur geringen Aufwands an Vorbehandlung, insbesondere im Vergleich zu anderen Verfahren. Beispielsweise im Vergleich zu Dampf- und authothermer Reformierung, oder direkt in einer reversen Wassergasshift, wo die verwendeten Katalysatoren hinsichtlich des Olefingehalts nicht beliebig tolerant sind, braucht keine Olefinabtrennung zu erfolgen. Es ist ferner keine Vorwärmung nötig, die ggf. zu Koksbildung führen kann. Eine Zugabe von Dampf ist in der partiellen Oxidation nicht erforderlich, und es ergeben sich keine nachteiligen thermodynamischen Effekte.

### Kurze Beschreibung der Zeichnung

Ausführungsformen der Erfindung werden nachfolgend rein beispielhaft unter Bezugnahme auf die beigefügte Zeichnung beschrieben, wobei
Figuren 1 bis 4 Verfahren gemäß unterschiedlicher Ausgestaltungen der vorliegenden Erfindung veranschaulichen, und
Figur 5 Details von Verfahren gemäß unterschiedlicher Ausgestaltungen der vorliegenden Erfindung veranschaulicht.

### Ausführungsformen der Erfindung

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

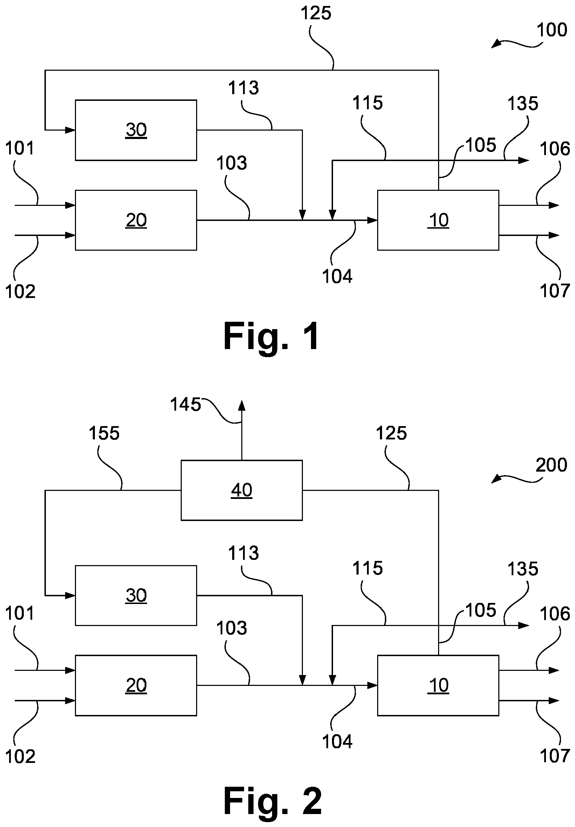

In Figur 1 ist ein Verfahren gemäß einer Ausgestaltung der vorliegenden Erfindung anhand eines vereinfachten schematischen Ablauf- bzw. Anlagenplans veranschaulicht und insgesamt mit 100 bezeichnet.

Das Verfahren 100 umfasst die Verwendung einer zur Fischer-Tropsch-Synthese eingerichteten Syntheseeinheit 10 und einer für eine reverse Wassergasshift eingerichtete Shifteinheit 20. Der Shifteinheit 20 werden (getrennt oder in einem Gasgemisch) Wasserstoff 101 und Kohlendioxid 102 zugeführt. Es kann auch ein Synthesegas verwendet werden, das neben diesen Komponenten bereits Kohlenmonoxid enthält, wie eingangs erläutert. Auch beliebige Mischungen unterschiedlicher Stoffströme sind möglich.

In der Shifteinheit 20 wird durch reverse Wassergasshift aus Wasserstoff und Kohlendioxid (weiteres) Kohlenmonoxid gebildet. Es handelt sich um eine Gleichgewichtsreaktion, so dass ein der Shifteinheit 20 entnommenes Gasgemisch 103 Wasserstoff, Kohlenmonoxid und Kohlendioxid aufweist. Dieses Gasgemisch 103 wird mit weiterem Synthesegas 113 und einem Endgasanteil 115 aus einer internen Rückführung zu einem Speisegemisch 104 vereinigt, welches in die Syntheseeinheit 10 eingespeist wird. In der Fischer-Tropsch-Synthese in der Syntheseeinheit 10, der im veranschaulichten Beispiel auch eine entsprechende Trenneinheit zugeordnet ist, werden das Endgas 105, ein Rohprodukt 106 und Abwasser 107 gebildet.

Das Endgas wird in dem hier veranschaulichten Beispiel in den intern rückgeführten Anteil 115, der hier auch als erster Anteil bezeichnet wird, einen zweiten Anteil 125 und einen Spülgasanteil 135 aufgeteilt, und zwar aus den zuvor mehrfach erwähnten Gründen. Der zweite Anteil 125 wird in eine Synthesegaserzeugungseinheit 30 eingespeist, die zur Synthesegasherstellung mittels Dampfreformierung, autothermer Reformierung oder partieller Oxidation eingerichtet sein kann, überführt, so dass auf diese Weise das weitere Synthesegas 113 bereitgestellt werden kann.

In Figur 2 ist ein Verfahren gemäß einer Ausgestaltung der vorliegenden Erfindung anhand eines vereinfachten schematischen Ablauf- bzw. Anlagenplans veranschaulicht und insgesamt mit 200 bezeichnet.

In dem in Figur 2 veranschaulichten Verfahren 200 wird der zweite Anteil 125 des Endgases 105 nicht direkt in die Synthesegaserzeugungseinheit 30 überführt, sondern zunächst in einer Trenneinheit 40 bearbeitet, in der insbesondere Kohlenwasserstoffe mit zwei und/oder drei Kohlenstoffatomen abgetrennt und in ein entsprechendes Trennprodukt 145 überführt werden können. Der an Kohlenwasserstoffen mit zwei und/oder drei Kohlenstoffatomen abgereicherte Rest kann als Folgegemisch 155 des zweiten Anteils 125 der Synthesegaserzeugungseinheit 30 zugeführt werden.

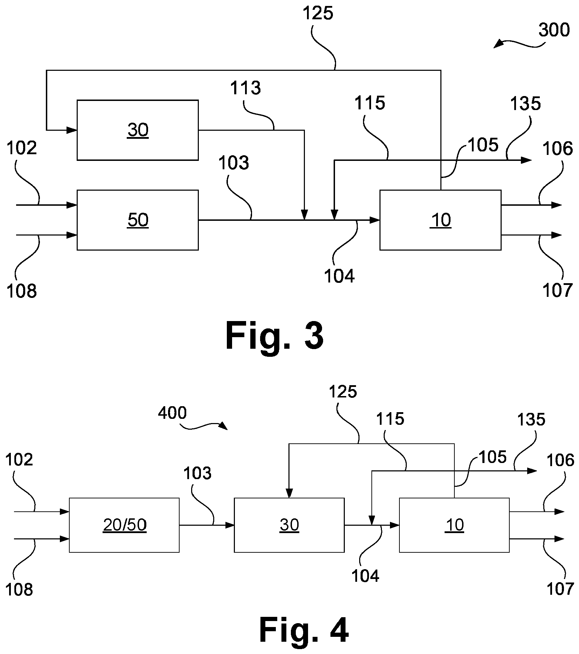

In Figur 3 ist ein Verfahren gemäß einer Ausgestaltung der vorliegenden Erfindung anhand eines vereinfachten schematischen Ablauf- bzw. Anlagenplans veranschaulicht und insgesamt mit 300 bezeichnet.

Das Verfahren 300 gemäß Figur 3 stellt insbesondere eine Variante des Verfahrens 100 gemäß Figur 1 dar, in der jedoch anstelle der Shifteinheit 20 eine zur Hochtemperatur-Co-Elektrolyse von Wasser und Kohlendioxid eingerichtete Co-Elektrolyseeinheit 50 bereitgestellt ist, in die Kohlendioxid 102 und Dampf 108 eingespeist werden. Auch auf diese Weise kann ein Gasgemisch 103 der zuvor erläuterten Zusammensetzung gebildet werden.

In Figur 4 ist ein Verfahren gemäß einer weiteren Ausgestaltung der vorliegenden Erfindung anhand eines vereinfachten schematischen Ablauf- bzw. Anlagenplans veranschaulicht und insgesamt mit 400 bezeichnet. Es handelt sich hier im Gegensatz zu dem in Figur 3 veranschaulichten Ausgestaltung um eine serielle Anordnung, in der ein Produktgemisch 103 aus dem einen oder den mehreren ersten Synthesegasbereitstellungsschritten bzw. einer Shifteinheit 20 oder einer Co-Elektrolyseeinheit 50, den mehreren zweiten Synthesegasbereitstellungsschritten bzw. der Synthesegaserzeugungseinheit 30 in unveränderter Zusammensetzung zugeführt wird, wie beispielsweise in einer reversen Wassergasshift mit nachgeschalteter partieller Oxidation der Fall. Der zweite Anteil 125 kann dabei der Synthesegaserzeugungseinheit 30 zugeführt werden.

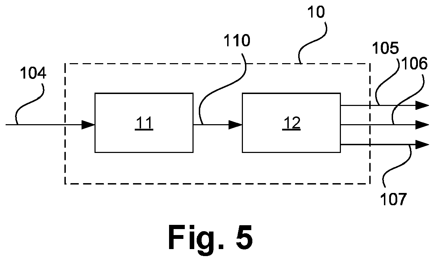

In Figur 5 sind Details einer Syntheseeinheit 10 gemäß einer Ausgestaltung der vorliegenden Erfindung anhand eines vereinfachten schematischen Ablauf- bzw. Anlagenplans veranschaulicht. Die Syntheseeinheit 10 kann in jeder der zuvor erläuterten Ausgestaltungen zum Einsatz kommen.

Wie in Figur 5 veranschaulicht, kann die mit einer gestrichelten Linie dargestellte Syntheseeinheit 10 einen oder mehrere Synthesereaktoren 11 und eine Trenneinrichtung 12 umfassen. Dem oder den Synthesereaktor(en) 11 wird ein Produktgemisch 110 entnommen, das in der Trenneinrichtung 12 in die zuvor erläuterten Fraktionen Endgas 105, Rohprodukt 106 und Abwasser 107 getrennt wird.

## Patentansprüche

1. Verfahren (100, 200, 300, 400) zur Herstellung eines Zielprodukts, bei dem Synthesegas (103, 113) einer Fischer-Tropsch-Synthese (10) unterworfen wird, wobei das Synthesegas (103, 113) unter Verwendung eines oder mehrerer erster Synthesgasbereitstellungsschritte (20, 50) und eines oder mehrerer zweiter Synthesegasbereitstellungsschritte (30) bereitgestellt wird, wobei unter Verwendung der Fischer-Tropsch-Synthese (10) ein Produktgemisch (110) bereitgestellt wird, wobei das Produktgemisch (110) oder ein Teil hiervon unter Erhalt eines Endgases (105) und eines Rohprodukts (106) einer Trennung (12) unterworfen wird, wobei ein erster Anteil (115) des Endgases (105) in einer gegenüber dem Endgas (105) unveränderten Zusammensetzung der Fischer-Tropsch-Synthese (10) erneut zugeführt wird, und wobei ein zweiter Anteil (125) des Endgases (105) oder ein Folgegemisch (155), das unter Verwendung des zweiten Anteils (125) des Endgases (105) gebildet wird, in den einen oder zumindest einen der mehreren zweiten Synthesegasbereitstellungsschritte (30), jedoch nicht in den einen oder einen der mehreren ersten Synthesegasbereitstellungsschritte (20, 50), überführt wird, oder als Brenngas verwendet wird.

2. Verfahren (100, 200, 300, 400), bei dem der eine oder die mehreren ersten Synthesegasbereitstellungsschritte (20, 50) eine reverse Wassergasshift und/oder einen Elektrolyseschritt unter Verwendung einer Festoxidelektrolysezelle umfassen.

3. Verfahren (100, 200, 300) nach Anspruch 1 oder 2, bei dem ein erster Anteil (103) des Synthesegases (103, 113) unter Verwendung des einen oder der mehreren ersten Synthesegasbereitstellungsschritte (20, 50) und ein zweiter Anteil (113) des Synthesegases (103, 113) unter Verwendung des einen oder der mehreren zweiten Syntgesegasbereitstellungsschritte (30) bereitgestellt wird, wobei der eine oder die mehreren ersten Synthesegasbereitstellungsschritte (20, 50) und der eine oder die mehreren zweiten Synthesegasbereitstellungsschritte (30) zumindest zum Teil parallel zueinander durchgeführt werden.

4. Verfahren (300) nach Anspruch 1 oder 2, bei dem ein Produktgemisch (103) aus dem einen oder den mehreren ersten Synthesegasbereitstellungsschritten (20, 50) zumindest zu einem Teil dem einen oder den mehreren zweiten Synthesegasbereitstellungsschritten (30) in unveränderter Zusammensetzung zugeführt wird, so dass der eine oder die mehreren ersten Synthesegasbereitstellungsschritte (20, 50) und der eine oder die mehreren zweiten Synthesegasbereitstellungsschritte (30) zumindest zum Teil seriell hintereinander durchgeführt werden.

5. Verfahren (100, 200, 300, 400) nach einem der vorstehenden Ansprüche, bei dem das Synthesegas (103) Wasserstoff, Kohlenmonoxid und Kohlendioxid enthält.

6. Verfahren (100, 200, 300) nach einem der vorstehenden Ansprüche, bei dem das Endgas (105) Wasserstoff, Kohlenmonoxid, Kohlendioxid, Methan, einen oder mehrere Kohlenwasserstoffe mit zwei, drei und/oder vier Kohlenstoffatomen und ein oder mehrere Inertgase enthält.

7. Verfahren (100, 200) nach einem der vorstehenden Ansprüche, bei dem der eine oder zumindest einer der mehreren ersten Synthesegasbereitstellungsschritte (20, 50) eine reverse Wassergasshift (20) ist, der Wasserstoff (101) und Kohlendioxid (102) zugeführt werden, und in der ein Teil des Wasserstoffs mit einem Teil des Kohlendioxids zu Kohlenmonoxid und Wasser umgesetzt wird.

8. Verfahren (100) nach Anspruch 7, bei dem der zweite Anteil (125) des Endgases (105) in einer gegenüber dem Endgas (105) unveränderten Zusammensetzung in den einen oder zumindest einen der mehreren zweiten Synthesegasbereitstellungsschritte (30) überführt wird.

9. Verfahren (200) nach Anspruch 8, bei dem in den einen oder zumindest einen der mehreren zweiten Synthesegasbereitstellungsschritte (30) das Folgegemisch (155), das unter Verwendung des zweiten Anteils (125) des Endgases (105) gebildet wird, überführt wird, wobei das Folgegemisch (155) unter Verwendung eines Trennschritts (40) gebildet wird, dem der zweite Anteil (125) des Endgases (105) zugeführt wird, und in dem das Folgegemisch (155) als ein gegenüber dem zweiten Anteil (125) des Endgases (105) an Kohlenwasserstoffen mit zwei und mehr Kohlenstoffatomen abgereichertes und an tiefer siedenden Verbindungen angereichertes Komponentengemisch (145) gebildet wird.

10. Verfahren (100, 200, 300, 400) nach einem der vorstehenden Ansprüche, bei dem aus dem Synthesegas (103, 113), das der Fischer-Tropsch-Synthese (10) unterworfen wird, oder aus einem Teil hiervon, Kohlendioxid abgetrennt wird, wobei das abgetrennte Kohlendioxid insbesondere zumindest zum Teil in den einen oder zumindest einen der mehreren ersten und/oder zweiten Synthesegasbereitstellungsschritte (20, 30, 50) zurückgeführt wird.

11. Verfahren (300) nach einem der vorstehenden Ansprüche, bei dem der eine oder zumindest einer der mehreren ersten Synthesegasbereitstellungsschritte (20, 50) ein Hochtemperatur-Co-Elektrolyseschritt (50) ist, in dem Kohlendioxid und Wasser unter Erhalt von Wasserstoff und Kohlenmonoxid co-elektrolyisert werden.

12. Verfahren (100, 200, 300, 400) nach einem der vorstehenden Ansprüche, bei der eine oder einer der mehreren zweiten Synthesegasbereitstellungsschritte (30) unter Verwendung einer Dampfreformierung, einer autothermen Reformierung oder einer partiellen Oxidation durchgeführt wird, und/oder bei dem in dem einen oder zumindest einem der mehreren ersten und/oder zweiten Synthesegasbereitstellungsschritte (20, 30, 50) Sauerstoff oder ein sauerstoffhaltiger Strom genutzt wird.

13. Verfahren (100, 200, 300, 400) nach einem der Ansprüche 4 bis 9, bei dem die reverse Wassergasshift unter Verwendung von Verbrennungswärme durchgeführt wird, wobei ein dritter Anteil (135) des Endgases (105) zur Bereitstellung der Verbrennungswärme verwendet wird, oder bei dem die reverse Wassergasshift unter Verwendung von elektrischer Wärme durchgeführt wird, wobei ein dritter Anteil (135) des Endgases (105) in gegenüber dem Endgas (105) unveränderter Zusammensetzung aus dem Verfahren (300) ausgeleitet wird.

14. Anlage zur Herstellung eines Zielprodukts, die dafür eingerichtet ist, Synthesegas (103, 113) einer Fischer-Tropsch-Synthese (10) zu unterwerfen, das Synthesegas (103, 113) unter Verwendung eines oder mehrerer erster Synthesgasbereitstellungsschritte (20, 50) und eines oder mehrerer zweiter Synthesegasbereitstellungsschritte (30) bereitzustellen, unter Verwendung der Fischer-Tropsch-Synthese (10) ein Produktgemisch (110) bereitzustellen, das Produktgemisch (110) oder einen Teil hiervon unter Erhalt eines Endgases (105) und eines Rohprodukts (106) einer Trennung (12) zu unterwerfen, einen ersten Anteil (115) des Endgases (105) in einer gegenüber dem Endgas (105) unveränderten Zusammensetzung der Fischer-Tropsch-Synthese (10) erneut zuzuführen, und einen zweiten Anteil (125) des Endgases (105) oder ein Folgegemisch (155), das unter Verwendung des zweiten Anteils (125) des Endgases (105) gebildet wird, in den einen oder zumindest einen der mehreren zweiten Synthesegasbereitstellungsschritte (30), jedoch nicht in den einen oder einen der mehreren ersten Synthesegasbereitstellungsschritte (20, 50) zu überführen oder als Brenngas zu verwenden.

15. Anlage nach Anspruch 14, die zur Durchführung eines Verfahrens (100, 200, 300) nach einem der Ansprüche 1 bis 13 eingerichtet ist.
